# EUROPÄISCHE PATENTSCHRIFT

(11) **EP 3 596 279 B1**
(45) Veröffentlichungstag und Bekanntmachung des Hinweises auf die Patenterteilung: **28.04.2021**
(21) Anmeldenummer: 18705662.7
(22) Anmeldetag: 23.02.2018
(51) Int. Cl.: E04B 1/41, F16B 5/12, F16B 12/14

(54) **VERBINDER ZUM SCHRÄGVERSCHRAUBEN ZWEIER WERKSTÜCKE**
CONNECTOR FOR SCREWING TWO WORKPIECES AT AN ANGLE
ÉLÉMENT D'ASSEMBLAGE PAR VISSAGE OBLIQUE DE DEUX PIÈCES

(30) Priorität: 17.03.2017 EP 17161537
(43) Veröffentlichungstag der Anmeldung: 22.01.2020
(73) Patentinhaber: Knapp GmbH, 3324 Euratsfeld (AT)
(72) Erfinder: KNAPP, Friedrich, 4362 Bad Kreuzen (AT)
(74) Vertreter: Weiser & Voith Patentanwälte Partnerschaft
(86) Internationale Anmeldenummer: PCT/EP2018/054469
(87) Internationale Veröffentlichungsnummer: WO 2018/166773

(56) Entgegenhaltungen:
- EP-A1- 2 799 636
- DE-A1-102009 022 161

## Beschreibung

Die vorliegende Erfindung betrifft einen Verbinder zum Schrägverschrauben zweier Werkstücke, umfassend einen Grundkörper mit einer Grundfläche, einer dazu parallelen Deckfläche und einer diese verbindenden, im Wesentlichen allgemein-zylindrischen Mantelfläche zum formschlüssigen Einsetzen in ein allgemein-zylindrisches Sackloch eines der Werkstücke und eine den Grundkörper unter einem zu Grund- und Deckfläche spitzen Winkel durchsetzende erste Bohrung für eine Schraube.

Zwei Werkstücke, z.B. Holzwerkstücke, können entweder stumpf, z.B. auf Stoß oder in Gehrung, mit Überlappung, z.B. mit Nut und Spund, Schlitz und Zapfen, Zinkungen od.dgl., oder mit Hinterscheidungen, z.B. einer Schwalbenschwanzverbindung, Gratung od.dgl., miteinander verbunden werden. Zur Erhöhung der Stabilität kann die Verbindung zusätzlich verklebt bzw. verleimt, gedübelt, genagelt und/oder verschraubt werden. Ferner ist bekannt, eine Platte - z.B. aus Metall - über eine Verbindungsstelle zweier Werkstücke zu legen und mit beiden Werkstücken zu verschrauben oder an die Werkstücke zu nageln. Stehen dabei Schrauben oder Nägel in rechtem Winkel zu der Metallplatte, so ist deren Belastung infolge von Zugkräften der beiden Werkstücke eine ungünstige Scherbelastung.

Einen Spezialfall für eine Verbindung mit verschraubter Metallplatte stellt die Schrägverschraubung dar, bei welcher die Schrauben in spitzem Winkel durch die Metallplatte in das jeweilige Werkstück gedreht werden, sodass jede Schraube von der Verbindungsstelle weg weist. Um den für die Schrägstellung der Schrauben vorgesehenen spitzen Winkel einfacher einhalten zu können, ist ferner bekannt, zusätzliche Führungselemente in die Metallplatte einzuarbeiten oder z.B. in Form von Winkel-Unterlegscheiben einzusetzen. Bei einer Schrägverschraubung sind die Schrauben - je nach Schrägstellung - im Wesentlichen auf Zug belastet und werden, wenn überhaupt, nur in geringem Ausmaß auf Scherung beansprucht, wodurch die Schrauben höhere Kräfte als bei Verschraubung im rechten Winkel aufnehmen können und eine stabile Verbindung der Werkstücke erzielt wird.

Allerdings bedingen solche Schrägverschraubungen durch Platte, Führungselemente und Schrauben einen hohen Material- und folglich Transport- und Lageraufwand und bleiben an der Oberfläche oft störend deutlich sichtbar. Ferner können beim Setzen solcher Schrägverschraubungen Lokalisierungsfehler und sogar Auslassungen einzelner Schrägverschraubungen auftreten, ohne dass dies an einem fertiggestellten Aufbau aus mehreren Werkstücken sofort erkennbar wäre. Dadurch wird die Belastbarkeit der Verbindung unvorhergesehen herabgesetzt. Überdies sind bei Arbeiten über Kopf Vorkehrungen zu treffen, um ein Herabfallen von zunächst losen Teilen zu verhindern.

Aus der EP 2 799 636 A1 ist ein Verbinder bekannt, bei welchem ein allgemein-zylindrischer Grundkörper von vier sternförmig auseinanderlaufenden Verbindungsschrauben schräg durchsetzt wird. Der Verbinder wird mit zwei der Verbindungsschrauben an einem Werkstück verankert und mit den beiden anderen Verbindungsschrauben am anliegenden anderen Werkstück verschraubt. Zwischen den Verbindungsschrauben hat der Grundkörper optional Öffnungen für senkrechte Positionierschrauben.

Die Erfindung setzt sich zum Ziel, einen Verbinder zum Schrägverschrauben zweier Werkstücke zu schaffen, der materialsparend und dabei einfach und sicher in der Anwendung ist.

Dieses Ziel wird erfindungsgemäß mit einem Verbinder der eingangs genannten Art erreicht, welcher sich auszeichnet durch zumindest zwei die erste Bohrung flankierende, den Grundkörper etwa normal zu Grund- und Deckfläche durchsetzende zweite Bohrungen für jeweils eine weitere Schraube.

Eine die Verbindungsstelle der beiden Werkstücke übergreifende Metallplatte kann auf diese Weise entfallen. Der Verbinder ist bei geeigneter Sacklochtiefe bündig mit dem Werkstück in das Sackloch eingesetzt und nur wenig sichtbar; dennoch ist eine fehlerhafte Anordnung der Verbinder bei vorgefertigten Sacklöchern ausgeschlossen und ein planungswidriges Auslassen einzelner Verbinder fiele sofort ins Auge, da Sacklöcher unbesetzt blieben. Der Verbinder überträgt die Kräfte aus der Schrägverschraubung des einen Werkstücks über die erste Bohrung und die Mantelfläche direkt auf die Wandung des Sacklochs im anderen Werkstück, an welchem der Grundkörper mithilfe der weiteren Schrauben in den zweiten Bohrungen fest verankert ist. Diese weiteren Schrauben in den zweiten Bohrungen festigen das Werkstück rund um das Sackloch und verhindern beispielsweise dessen Aufspalten und ein Einsinken des Grundkörpers in die Wandung des Sacklochs und Verkippen des Grundkörpers infolge der Zugkräfte der Schrägverschraubung. Der Verbinder kann zum Schrägverschrauben nicht bloß von Werkstücken aus Holz sondern auch von solchen aus anderen Materialien, z.B. Kunststoff, Verbundstoff oder sogar Metall, eingesetzt werden.

Besonders günstig ist es, wenn Deck- und Mantelfläche eine Abschrägung haben, von welcher die genannte erste Bohrung ausgeht. Eine solche Abschrägung hilft, einen (zu großen) Überstand des Kopfes einer durch die erste Bohrung gedrehten Schraube über den Grundkörper des Verbinders zu vermeiden, und kann dem Schraubenkopf ferner einen dem genannten Winkel entsprechenden Sitz am Verbinder geben.

Bevorzugt ist die Grundfläche des Verbinders im Wesentlichen rund. Ein dazu komplementäres rundes Sackloch im Werkstück ist besonders einfach erzeugbar, z.B. nachträglich durch Bohren oder Fräsen. Ferner ist die Krafteinleitung eines runden Verbinders in das Werkstück günstig, da lokale Kraftspitzen, welche bei z.B. eckigen Verbindern aufträten, vermieden werden.

In einer vorteilhaften Variante des Verbinders ist der genannte spitze Winkel zwischen 15 und 60 Grad, bevorzugt etwa 30 Grad. Ein solcher Winkel führt zu einer günstigen Kraftwirkung der Schrägverschraubung auf die Werkstücke.

Bevorzugt hat der Grundkörper an seiner Mantelfläche zu Grund- und Deckfläche normal verlaufende Keilrippen, welche sich in Richtung zur Grundfläche hin verjüngen. Dadurch verkeilt der Verbinder beim Einsetzen in das Sackloch und fällt vor dem Eindrehen der Schrauben auch bei Arbeiten über Kopf nicht aus dem Werkstück. Durch die Verjüngung wird ein einfaches, selbst-zentrierendes Einsetzen ermöglicht.

Vorteilhaft ist ferner, wenn der Grundkörper an seiner Mantelfläche zu Grund- und Deckfläche normal verlaufende Kerben hat, welche sich in Richtung zur Grundfläche hin verjüngen. Solche Kerben bewirken eine zusätzliche formschlüssige Verspreizung des Grundkörpers im Sackloch unter Zugkraft.

Zum Zentrieren der Schrauben sind bevorzugt die genannte erste Bohrung und/oder die genannten zweiten Bohrungen zur Aufnahme der Schraubenköpfe angesenkt.

Eine besonders günstige Kräfteverteilung des Verbinders auf die Wandung des Sacklochs ergibt sich, wenn die genannte erste Bohrung die Grundfläche durchsetzt. In diesem Fall greift die Mantelfläche des Verbinders an ihrer am stärksten belasteten Seite in Richtung der Schrägverschraubung kantenfrei an der Wandung des Sacklochs an, wodurch die Gefahr eines Spaltens des Werkstücks mit Sackloch reduziert wird.

Eine bevorzugte Ausführungsform des Verbinders zeichnet sich durch eine Unterlegplatte zum Unterlegen des Grundkörpers in dem Sackloch des Werkstücks aus, welche Unterlegplatte
einen der Grundfläche des Grundkörpers kongruenten Zylinderabschnitt mit einem Langloch in Verlängerung der genannten ersten Bohrung des Grundkörpers und mit das Langloch flankierenden Bohrungen in Verlängerung der genannten zweiten Bohrungen des Grundkörpers und
einen vom Zylinderabschnitt auskragenden Zungenabschnitt hat, welcher von zumindest einer dritten Bohrung etwa normal durchsetzt ist.

Das Sackloch wird dabei in seinem Querschnitt an die Form der Unterlegplatte angepasst. Die unter den Grundkörper in das Sackloch legbare Unterlegplatte führt zu einer weiter verbesserten Verankerung des Verbinders im Sackloch. Verbinder und Schrauben können dadurch kleiner gewählt werden oder sogar das Sackloch werkstückübergreifend gesetzt sein, sodass der Verbinder nach Art einer Zapfenverbindung ein gegeneinander Verschieben der Werkstücke bereits bei der Montage verhindert.

In einer besonders stabilen Ausführungsform ist der Verbinder aus Metall, bevorzugt aus Aluminium.

Die Erfindung wird nachfolgend anhand von in den beigeschlossenen Zeichnungen dargestellten Ausführungsbeispielen näher erläutert. In den Zeichnungen zeigen:
Fig. 1 einen Grundkörper eines erfindungsgemäßen Verbinders zum Schrägverschrauben zweier Werkstücke in einer Perspektivansicht von schräg oben;
die Fig. 2 und 3 den Verbinder von Fig. 1 in einer in ein Sackloch eines Werkstücks eingesetzten, mit einem zweiten Werkstück verschraubten Stellung in einer Perspektivansicht von schräg oben (Fig. 2) bzw. in einem Längsschnitt (Fig. 3);
Fig. 4 eine Unterlegplatte des Verbinders zum Unterlegen des Grundkörpers von Fig. 1 in einer Perspektivansicht von schräg oben; und
die Fig. 5 und 6 den Verbinder mit Grundkörper gemäß Fig. 1 und Unterlegplatte gemäß Fig. 4 in der in das Sackloch des einen Werkstücks eingesetzten, mit dem zweiten Werkstück verschraubten Stellung in einer Perspektivansicht von schräg oben (Fig. 5) bzw. in einem Längsschnitt (Fig. 6).

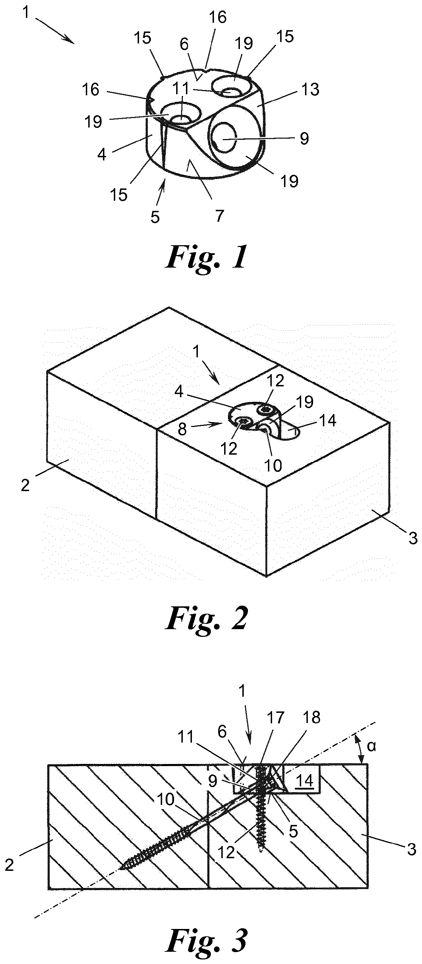

Die Fig. 1 bis 3 zeigen eine erste Ausführungsform eines Verbinders 1 zum Schrägverschrauben zweier Werkstücke 2, 3. Der Verbinder 1 hat einen Grundkörper 4 mit einer Grundfläche 5 (Fig. 3), einer zur Grundfläche 5 parallelen Deckfläche 6 und einer die Grundfläche 5 und die Deckfläche 6 verbindenden, allgemein-zylindrischen Mantelfläche 7. Der Grundkörper 4 wird in ein allgemein-zylindrisches Sackloch 8 eines der Werkstücke 2, 3 - hier: in ein Sackloch 8 des rechten Werkstücks 3 - formschlüssig eingesetzt.

Der Verbinder 1 hat eine den Grundkörper 4 unter einem zu Grund- und Deckfläche 5, 6 spitzen Winkel α durchsetzende erste Bohrung 9 für eine Schraube 10. Ferner hat der Verbinder 1 zumindest zwei die erste Bohrung 9 flankierende, den Grundkörper 4 etwa normal zu Grund- und Deckfläche 5, 6 durchsetzende zweite Bohrungen 11 für jeweils eine weitere Schraube 12.

Der genannte zu Grund- und Deckfläche 5, 6 spitze Winkel a, unter welchem die erste Bohrung 9 den Grundkörper 4 durchsetzt, ist optional zwischen 15 und 60 Grad, in dem Beispiel der Fig. 3 etwa 30 Grad.

Im Beispiel der Fig. 1 bis 3 ist die Grundfläche 5 des Grundkörpers 4 im Wesentlichen rund. Dabei haben Deck- und Mantelfläche 6, 7 des Grundkörpers 4 eine Abschrägung 13, von welcher die erste Bohrung 9 in etwa rechtem Winkel ausgeht. Alternativ könnte die Grundfläche 5 z.B. oval oder mehreckig sein und/oder die erste Bohrung 9 von der Deckfläche 6 oder der Mantelfläche 7 ausgehen.

Auch das Sackloch 8 hat in dem Beispiel der Fig. 2 und 3 überwiegend runden Querschnitt und eine optionale Ausnehmung 14, um das Eindrehen der Schraube 10 in die erste Bohrung 9 zu ermöglichen bzw. zu erleichtern. Alternativ könnte das Sackloch 8 eine andere Querschnittsform haben, z.B. oval oder eckig. Ferner muss das Sackloch 8 zum formschlüssigen Einsetzen des Verbinders 1 nicht notwendigerweise einen der Grundfläche 5 des Grundkörpers 4 konformen Querschnitt haben.

In einer nicht dargestellten Alternativ-Variante hat der Grundkörper mehr als eine den Grundkörper 4 unter spitzem Winkel α zu Grund- und Deckfläche 5, 6 durchsetzende erste Bohrung 9. Die zwei oder mehr ersten Bohrungen 9 können dabei nebeneinander z.B. von der optionalen Abschrägung 13 ausgehen oder gleichsam übereinander angeordnet sein, sodass eine erste Bohrung 9 von der optionalen Abschrägung 13, eine weitere erste Bohrung 9 von der Deckfläche 6 oder einer (nicht dargestellten) Aussparung darin und/oder eine weitere erste Bohrung 9 von der Mantelfläche 7 ausgehen könnte. Die eine oder mehrere ersten Bohrungen 9 sind jeweils von zwei oder mehreren zweiten Bohrungen 11 flankiert, wobei bei mehreren nebeneinander angeordneten ersten Bohrungen 9 einige der zweiten Bohrungen 11 auch zwischen den ersten Bohrungen 9 sitzen könnten.

In dem Beispiel von Fig. 1 hat der Grundkörper 4 an seiner Mantelfläche 7 zu Grund- und Deckfläche 5, 6 normal verlaufende, optionale Keilrippen 15, welche sich in Richtung zur Grundfläche 5 hin verjüngen. Die Keilrippen 15 sind dabei an der Mantelfläche 7 nach Bedarf verteilt, um den Verbinder 1 beim Einsetzen in das Sackloch 8 darin zu verkeilen.

Ferner kann der Grundkörper 4, wenn gewünscht, an seiner Mantelfläche 7 zu Grund- und Deckfläche 5, 6 normal verlaufende, Kerben 16 haben, welche sich ebenfalls in Richtung zur Grundfläche 5 hin verjüngen. Auch die optionalen Kerben 16 sind an der Mantelfläche 7 nach Bedarf verteilt.

Die ersten und/oder zweiten Bohrungen 9, 11 sind zur Aufnahme der Köpfe 17, 18 der Schraube 10 für die erste Bohrung 9 bzw. der weiteren Schrauben 12 für die zweiten Bohrungen 11 optional angesenkt, d.h. sie haben jeweils eine Senkung 19 für die Schraubenköpfe 17, 18.

Bei dem Verbinder 1 gemäß dem Beispiel von Fig. 3 durchsetzt die erste Bohrung 9 die Grundfläche 5 des Grundkörpers 4. Bei anderer Form des Grundkörpers 4, z.B. einer höheren Mantelfläche 7, einer kleineren Grundfläche 5, einer ausgedehnteren Abschrägung 13 und/oder einem kleineren Winkel α könnte die erste Bohrung 9 alternativ zumindest teilweise die Mantelfläche 7 durchsetzen.

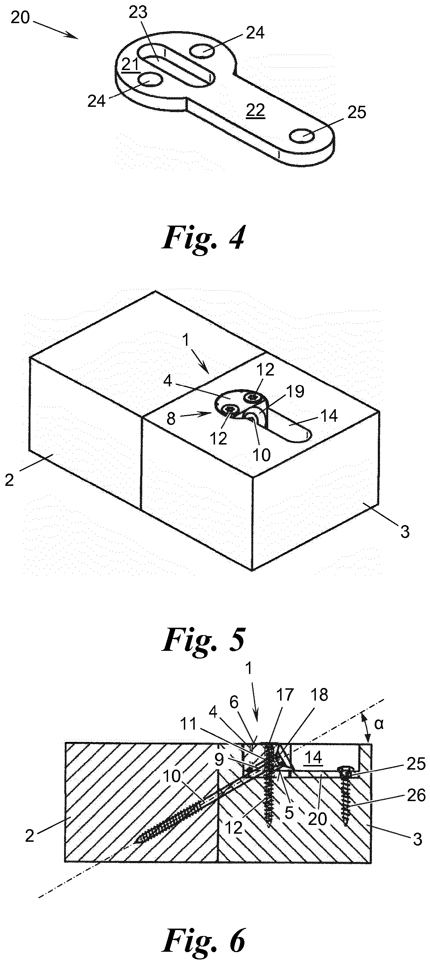

In der alternativen Ausführungsform nach den Fig. 4 bis 6, in welchen gleiche Teile die gleichen Bezugszeichen tragen wie in den Fig. 1 bis 3, umfasst der Verbinder 1 ferner eine Unterlegplatte 20 zum Unterlegen des Grundkörpers 4 in dem Sackloch 8 des Werkstücks 3. Die Unterlegplatte 20 hat einen Zylinderabschnitt 21 und einen vom Zylinderabschnitt 21 auskragenden Zungenabschnitt 22.

Der Zylinderabschnitt 21 ist im Wesentlichen der Grundfläche 5 des Grundkörpers 4 kongruent. Auf ihm liegt der Grundkörper 4 in dem Sackloch 8 auf. In Verlängerung der genannten ersten Bohrung 9 des Grundkörpers 4 hat der Zylinderabschnitt 21 ein Langloch 23, welches wie die erstes Bohrung 9 von der Schraube 10 in ihrem eingedrehten Zustand (Fig. 6) durchsetzt wird. Im Falle eines besonders spitzen Winkels α könnte das Langloch 23 optional ein einseitig offener Schlitz sein.

Im Zylinderabschnitt 21 der Unterlegplatte 20 wird das Langloch 23 ferner von Bohrungen 24 in Verlängerung der genannten zweiten Bohrungen 11 des Grundkörpers 4 flankiert. Wie das Beispiel von Fig. 6 zeigt, werden die Bohrungen 24 von den in den zweiten Bohrungen 12 aufgenommenen weiteren Schrauben 12 in ihrem eingedrehten Zustand durchsetzt. Der Zungenabschnitt 22 der Unterlegplatte 20 ist von einer dritten Bohrung 25 für eine zusätzliche Schraube 26 etwa normal durchsetzt. Es versteht sich, dass der Zungenabschnitt 22 auch zwei oder mehr dritte Bohrungen 25 für zusätzliche Schrauben 26 aufweisen kann.

Das Sackloch 8 ist in der Variante nach den Fig. 4 bis 6 des Verbinders 1 an dessen Querschnitt angepasst, wenn auch nicht notwendigerweise kongruent. Ist der Zungenabschnitt 22, wie im dargestellten Beispiel, schmäler als der Zylinderabschnitt 21, so kann das Sackloch 8 dies in seinem Querschnitt optional widerspiegeln, wie im Beispiel von Fig. 5. Dabei übernimmt der Abschnitt des Sacklochs 8 für den Zungenabschnitt 22 zugleich die Funktion der Ausnehmung 14 zum Eindrehen der Schraube 10 für die Schrägverschraubung.

In dieser Variante des Verbinders 1 können Sacklock 8 und Verbinder 1, wenn gewünscht, werkstückübergreifend sein, d.h. zumindest zu einem kleinen Teil im linken Werkstück 2 und im Übrigen im rechten Werkstück 3 liegen (nicht dargestellt).

In den dargestellten Beispielen entspricht die Tiefe des Sacklochs 8 der Höhe der Mantelfläche 7 des Grundkörpers 4 bzw. der Summe aus Höhe der Mantelfläche 7 des Grundkörpers 4 und Dicke der Unterlegplatte 20, sodass die Deckfläche 6 des Grundkörpers 4 nach dessen Einsetzen in das Sackloch 8 bündig mit beiden Werkstücken 2, 3 abschließt. Ein solches bündiges Abschließen ist jedoch nicht notwendig für die Funktion des Verbinders 1. Der Grundkörper 4 des Verbinders 1 könnte deshalb alternativ nach dem vollständigen Einsetzen in das Sackloch 8 daraus hervorragen, d.h. der Grundkörper 4 (gegebenenfalls zusammen mit der Unterlegplatte 20) höher sein als das Sackloch 8 tief ist, oder darin versenkt sein, d.h. der Grundkörper 4 (gegebenenfalls zusammen mit der Unterlegplatte 20) niedriger sein als das Sackloch 8 tief ist. Ferner ist der Verbinder 1 auch für Werkstücke 2, 3 verwendbar, die nicht zueinander bündig sind, sondern z.B. stufenförmig aneinander anschließen.

In dargestellten Beispielen sind die Werkstücke 2, 3 aus Holz, sie könnten alternativ aus Kunststoff, Verbundstoff oder, bei geeigneter Schrägverschraubung, sogar aus Metall und dabei optional aus unterschiedlichen Werkstoffen sein.

Der Verbinder 1 ist in den Beispielen aus Aluminium, könnte alternativ jedoch aus einem anderen Metall oder aus Kunststoff bzw. Verbundstoff gefertigt sein. Ferner könnten in dem Beispiel der Fig. 4 bis 6 Grundkörper 4 und Unterlegplatte 20 aus unterschiedlichen Werkstoffen gefertigt sein.

Die Erfindung ist nicht auf die dargestellten Ausführungsformen beschränkt, sondern umfasst alle Varianten, Kombinationen und Modifikationen, die in den Rahmen der angeschlossenen Ansprüche fallen.

## Patentansprüche

1. Verbinder zum Schrägverschrauben zweier Werkstücke, umfassend
einen Grundkörper (4) mit einer Grundfläche (5), einer dazu parallelen Deckfläche (6) und einer diese verbindenden, im Wesentlichen allgemein-zylindrischen Mantelfläche (7) zum formschlüssigen Einsetzen in ein allgemein-zylindrisches Sackloch (8) eines der Werkstücke (2, 3), und
eine den Grundkörper (4) unter einem zu Grund- und Deckfläche (5, 6) spitzen Winkel (α) durchsetzende erste Bohrung (9) für eine Schraube (10),
**gekennzeichnet durch**
zumindest zwei die erste Bohrung (9) flankierende, den Grundkörper (4) etwa normal zu Grund- und Deckfläche (5, 6) durchsetzende zweite Bohrungen (11) für jeweils eine weitere Schraube (12).

2. Verbinder nach Anspruch 1, **dadurch gekennzeichnet, dass** Deck- und Mantelfläche (6, 7) eine Abschrägung (13) haben, von welcher die genannte erste Bohrung (9) ausgeht.

3. Verbinder nach Anspruch 1 oder 2, **dadurch gekennzeichnet, dass** die Grundfläche (5) im Wesentlichen rund ist.

4. Verbinder nach einem der Ansprüche 1 bis 3, **dadurch gekennzeichnet, dass** der genannte spitze Winkel (α) zwischen 15 und 60 Grad, bevorzugt etwa 30 Grad, ist.

5. Verbinder nach einem der Ansprüche 1 bis 4, **dadurch gekennzeichnet, dass** der Grundkörper (4) an seiner Mantelfläche (7) zu Grund- und Deckfläche (5, 6) normal verlaufende Keilrippen (15) hat, welche sich in Richtung zur Grundfläche (5) hin verjüngen.

6. Verbinder nach einem der Ansprüche 1 bis 5, **dadurch gekennzeichnet, dass** der Grundkörper (4) an seiner Mantelfläche (7) zu Grund- und Deckfläche (5, 6) normal verlaufende Kerben (16) hat, welche sich in Richtung zur Grundfläche (5) hin verjüngen.

7. Verbinder nach einem der Ansprüche 1 bis 6, **dadurch gekennzeichnet, dass** die genannte erste Bohrung (9) und/oder die genannten zweiten Bohrungen (11) zur Aufnahme der Schraubenköpfe (17, 18) angesenkt sind.

8. Verbinder nach einem der Ansprüche 1 bis 7, **dadurch gekennzeichnet, dass** die genannte erste Bohrung (9) die Grundfläche (5) durchsetzt.

9. Verbinder nach einem der Ansprüche 1 bis 8, **gekennzeichnet durch** eine Unterlegplatte (20) zum Unterlegen des Grundkörpers (4) in dem Sackloch (8) des Werkstücks (3), welche Unterlegplatte (20)
einen der Grundfläche (5) des Grundkörpers (4) kongruenten Zylinderabschnitt (21) mit einem Langloch (23) in Verlängerung der genannten ersten Bohrung (9) des Grundkörpers (4) und mit das Langloch (23) flankierenden Bohrungen (24) in Verlängerung der genannten zweiten Bohrungen (11) des Grundkörpers (4) und
einen vom Zylinderabschnitt (21) auskragenden Zungenabschnitt (22) hat, welcher von zumindest einer dritten Bohrung (25) etwa normal durchsetzt ist.

10. Verbinder nach einem der Ansprüche 1 bis 9, **dadurch gekennzeichnet, dass** der Verbinder (1) aus Metall, bevorzugt aus Aluminium, ist.

## Claims

1. Connector for slanted screwing of two workpieces, comprising
a base body (4) with a bottom surface (5), a top surface (6) parallel thereto, and a substantially generally-cylindrical mantle surface (7) connecting the base and top surfaces (5, 6) for positive insertion into a generally-cylindrical blind bore (8) of one of the workpieces (2, 3), and
a first bore (9) penetrating the base body (4) under an acute angle (α) with respect to the base and top surfaces (5, 6) for a screw (10),
**characterised by**
at least two second bores (11) flanking the first bore (9) and penetrating the base body (4) approximately perpendicularly with respect to the bottom and top surfaces (5, 6), each second bore for a further screw (12).

2. Connector according to claim 1, **characterised in that** the cover and mantle surfaces (6, 7) have a chamfer (13) from which said first bore (9) extends.

3. Connector according to claim 1 or 2, **characterised in that** the bottom surface (5) is substantially round.

4. Connector according to any one of claims 1 to 3, **characterised in that** said acute angle (α) is between 15 and 60 degrees, preferably approximately 30 degrees.

5. Connector according to any one of claims 1 to 4, **characterised in that** the base body (4) has wedge ribs (15) on its mantle surface (7), which wedge ribs run perpendicularly to the bottom and top surfaces (5, 6) and taper in a direction towards the bottom surface (5).

6. Connector according to any one of claims 1 to 5, **characterised in that** the base body (4) has recesses (16) on its mantle surface (7), which recesses run perpendicularly to the bottom and top surfaces (5, 6) and taper in a direction towards the bottom surface (5).

7. Connector according to any one of claims 1 to 6, **characterised in that** said first bore (9) and/or said second bores (11) are countersunk for receiving the screw heads (17, 18) .

8. Connector according to any one of claims 1 to 7, **characterised in that** said first bore (9) penetrates the bottom surface (5).

9. Connector according to any one of claims 1 to 8, **characterised by** a shim (20) for shimming the base body (4) in the blind bore (8) of the working piece (3), which shim (20) has
a cylindrical section (21) congruent to the bottom surface (5) of the base body (4), with an oblong hole (23) in prolongation of said first bore (9) of the base body (4) and with bores (24) which lie in prolongation of said second bores (11) of the base body (4) and flank the oblong hole (23), and
a tongue section (22) which projects from the cylindrical section (21) and is penetrated approximately perpendicularly by at least one third bore (25).

10. Connector according to any one of claims 1 to 9, **characterised in that** the connector (1) is made of metal, preferably of aluminium.

## Revendications

1. Connecteur pour le vissage en biais de deux pièces, comprenant
un corps de base (4) doté d'une surface de base (5), d'une surface de recouvrement (6) qui lui est parallèle, et d'une surface d'enveloppe (7) sensiblement généralement-cylindrique les reliant permettant l'insertion par complémentarité des formes dans un trou borgne (8) généralement-cylindrique d'une des pièces (2, 3), et
un premier alésage (9) traversant le corps de base (4) sous un angle (α) aigu par rapport aux surfaces de base et de recouvrement (5, 6) pour une vis (10),
**caractérisé par**
au moins deux deuxièmes alésages (11) flanquant le premier alésage (9) et traversant le corps de base (4) à peu près normalement par rapport aux surfaces de base et de recouvrement (5, 6) pour respectivement une autre vis (12).

2. Connecteur selon la revendication 1, **caractérisé en ce que** les surfaces de recouvrement et d'enveloppe (6, 7) ont un chanfrein (13) à partir duquel démarre ledit premier alésage (9) .

3. Connecteur selon la revendication 1 ou 2, **caractérisé en ce que** la surface de base (5) est sensiblement ronde.

4. Connecteur selon l'une des revendications 1 à 3, **caractérisé en ce que** ledit angle (α) aigu est entre 15 et 60 degrés, de préférence environ 30 degrés.

5. Connecteur selon l'une des revendications 1 à 4, **caractérisé en ce que** le corps de base (4) a des nervures cunéiformes (15) sur sa surface d'enveloppe (7), lesquelles s'étendent normalement par rapport aux surfaces de base et de recouvrement (5, 6) et s'amincissent en direction de la surface de base (5).

6. Connecteur selon l'une des revendications 1 à 5, **caractérisé en ce que** le corps de base (4) a des encoches (16) sur sa surface d'enveloppe (7), lesquelles s'étendent normalement par rapport aux surfaces de base et de recouvrement (5, 6) et s'amincissent en direction de la surface de base (5).

7. Connecteur selon l'une des revendications 1 à 6, **caractérisé en ce que** ledit premier alésage (9) et/ou lesdits deuxièmes alésages (11) sont chanfreinés ou lamés pour la réception des têtes de vis (17, 18).

8. Connecteur selon l'une des revendications 1 à 7, **caractérisé en ce que** ledit premier alésage (9) traverse la surface de base (5).

9. Connecteur selon l'une des revendications 1 à 8, **caractérisé par** une cale (20) permettant de caler le corps de base (4) dans le trou borgne (8) de la pièce (3), laquelle cale (20) a
un segment cylindrique (21), coïncidant avec la surface de base (5) du corps de base (4), doté d'un trou oblong (23) dans le prolongement dudit premier alésage (9) du corps de base (4) et doté d'alésages (24) flaquant le trou oblong (23) dans le prolongement desdits deuxièmes alésages (11) du corps de base (4) et
un segment en languette (22), saillissant à partir du segment cylindrique (21) et traversé à peu près normalement par au moins un troisième alésage (25).

10. Connecteur selon l'une des revendications 1 à 9, **caractérisé en ce que** le connecteur (1) est en métal, de préférence, en aluminium.
